# EUROPEAN PATENT APPLICATION

(11) **EP 3 012 930 A1**
(43) Date of publication of application: **27.04.2016**
(21) Application number: 14813839.9
(22) Date of filing: 05.06.2014
(51) Int. Cl.: H02G 3/04

(54) **SELF-CLOSING THERMAL AND ELECTRICAL FIRE PROTECTION SHEATH**

(30) Priority: 19.06.2013 ES 201330765; 15.11.2013 ES 201331669
(71) Applicant: Relats, S.A., 08140 Caldes de Montbui (ES)
(72) Inventor: RELATS MANENT, Jordi, E-08140 Caldes de Montbui (ES); RELATS CASAS, Pere, E-08140 Caldes de Montbui (ES); RELATS TORANTE, Oriol, E-08140 Caldes de Montbui (ES); FRUNS MARTIN, Anna, E-08140 Caldes de Montbui (ES)
(74) Representative: Oficina Ponti, SLP
(86) International application number: PCT/ES2014/070465
(87) International publication number: WO 2014/202807

(57) **Abstract**

A self-closing thermal and electrical fire protection sheath (1) having a substantially tubular shape when not subjected to biasing forces, such that the longitudinal edges (2, 3) overlap to define an opening for the insertion of cables (4), tubes or the like into the sheath (1), wherein the sheath (1) has a layered structure, with a first layer (5) made up of a fabric braided from fibreglass filaments (7) and plastic monofilaments (8) and a second, outer layer (6), wherein the second layer (6) is made of silicone, the thickness of said second layer (6) being at least 200 microns. The invention also relates to methods for manufacturing said sheath.

## Description

The present invention relates tyo a self-closing thermal and electrical fire protection sheath.

### Background of the invention

Self-closing thermal and electrical fire protection sheaths having a substantially tubular shape when not subjected to biasing forces, and such that the longitudinal edges overlap to define an opening for the insertion of cables, tubes or similar into the sheath, wherein the sheath has a layered structure, one of said layers containing silicone.

Examples of these types of sheaths are disclosed in WO 201144345 A2 and WO 9830830 A1.

WO 9830830 A1 relates to a self-closing sheath made from metallic filaments having a structural tube skeleton function and supports a layer of glass wool as thermal insulation. Its metal content does not provide good electrical insulation characteristics.

WO 201144345 A2 discloses a self-closing sheath made from glass fibre impregnated with a mixture of silicone and acrylic and whose objective is to avoid fraying the product, due to which the sheath does not have thermal or electrical functions.

These sheaths provide electrical insulation and some thermal insulation. However, their electrical insulation and fire resistance are reduced and insufficient for many applications.

### Description of the invention

In order to solve the drawbacks of the state of the art, the present invention proposes a self-closing thermal and electrical fire protection sheath having a substantially tubular shape when not subjected to biasing forces, such that the longitudinal edges overlap to define an opening for the insertion of cables, tubes or similar into the sheath, wherein the sheath has a layered structure, with a first layer made up of a fabric braided from fibreglass filaments and plastic monofilaments and a second, outer layer, characterised in that the second layer is made of silicone, the thickness of said second layer being at least 200 microns.

In this sheath, the fibre filaments provide fire resistance, thermal and electrical resistance, and also serve as a support structure for the silicone. The plastic monofilaments, as known in the art, serve to provide the self-closing effect. The silicone provides high additional fire, thermal and electrical resistance.

In the present invention, the relatively high thickness of the silicone layer confers very high fire resistance, thermal resistance and electrical resistance characteristics to the self-closing sheath. Until know, silicone had been used to impregnate the protective fabric. However, in the present invention, although the outermost filaments may be impregnated, the silicone layer constitutes an external coating having substantial thickness.

According to a particularly preferred variant, the second layer also comprises an intumescent material. This material has the function of expanding the silicone layer in the presence of fire and at high temperatures, which has the effect of increasing thermal insulation and fire protection.

According to different optional characteristics of the sheath of the invention, which may be combined whenever technically possible:
- the intumescent material is graphite or ammonium polyphosphate;
- the monofilaments are made of PEEK, PPS, polyester or fluorinated monofilaments; and
- the silicone layer is externally adhered to the first layer, wherein the outermost filaments may be partially impregnated in silicone.

The invention also relates to a method for obtaining a self-closing thermal and electrical fire protection sheath having a substantially tubular shape when not subjected to biasing forces, such that the longitudinal edges overlap to define an opening for the insertion of cables, tubes or similar into the sheath, comprising the stages of obtaining a fabric consisting of fibreglass filaments and plastic filaments to obtain a first layer, cold adding a second layer of silicone over the first layer, vulcanising the second layer and carrying out a second shaping that causes the edges to overlap to configure a self-closing sheath.

According to a variant of the method, it comprises the stages of:
a) Plain braiding fibreglass filaments and plastic monofilaments to obtain a first layer;
b) Carrying out a first thermal shaping that causes the first layer to adopt a tubular shape, in the absence of biasing forces, wherein the edges do not overlap;
c) Cold adding a second layer of silicone over the first layer;
d) Carrying out the vulcanising of the second layer; and
e) Carrying out a second shaping that causes the edges to overlap to configure a self-closing sheath.

After stage b), the edges must not overlap to avoid inadequate joining of the silicone edges. Therefore, the shaping must be partial and shall subsequently be completed with stage e), which gives rise to the overlapping configuration ready to be used.

Preferably, the stage is carried out at a temperature between 200°C and 300°C.

More preferably, the stage is carried out disposing a separation element between the two edges to avoid the joining of the edges.

Advantageously, at least part of the necessary heat for stage e) is heat provided in stage d).

More advantageously, the second layer also comprises an intumescent material, which is preferably graphite.

The monofilaments are made of PEEK, PPS or polyester.

According to a second variant, the first layer is obtained in a weaving shed loom with plastic monofilament weft and fibreglass warp, carrying out the silicone cold coating, followed by vulcanisation and cutting of the fabric to obtain the desired sheath perimeter and carrying out the final shaping to obtain the self-closing effect.

According to a third variant, the first layer is obtained in a weaving shed loom that weaves the desired final width, using plastic monofilament weft and fibreglass warp, carrying out the silicone cold coating, followed by vulcanisation and final shaping to obtain the self-closing effect.

According to a fourth variant, the sheath of the invention can be obtained by means of a method that comprises the following stages:
- Plain braiding fibreglass filaments and plastic monofilaments to obtain a first layer.
- Cold adding a second silicone layer over the first layer.
- Carrying out the vulcanisation of the second layer.
- Carrying out the shaping that causes the edges to overlap to configure a self-closing sheath.

### Brief description of the drawings

In order to better understand the foregoing, a drawing is attached hereto wherein, schematically and solely by way of non-limiting example, an embodiment is represented.

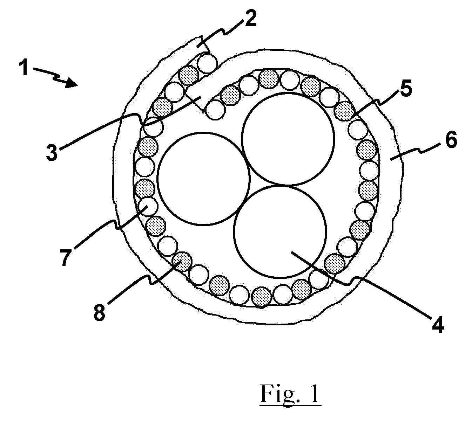

Figure 1 is a highly schematic cross-section of the sheath wherein cables have been inserted.

### Description of a preferred embodiment

As can be observed in the single drawing, the invention relates to a self-closing fire, thermal and electrical protection sheath 1 having a substantially tubular shape when not subjected to biasing forces and such that the longitudinal edges 2, 3 overlap to define an opening for the insertion of cables 4, tubes or similar into the sheath 1, wherein the sheath 1 has a layered structure, a first layer 5 consisting of a braided fabric of fibreglass filaments 7 and plastic monofilaments 8 and a second outer layer 6.

Being the aforementioned structure a known structure, the present invention is characterised in that the second layer 6 is made of silicone, the thickness of said second layer 6 being at least 200 microns.

According to a particularly preferred embodiment of the invention, the second layer 6 also comprises an intumescent material, preferably graphite, the monofilaments 8 are made of PEEK, PPS or polyester and the silicone layer 6 is adhered externally to the first layer 5.

The invention also relates to a method for obtaining a self-closing thermal and electrical protection sheath 1, having a substantially tubular shape when not subjected to biasing forces, and such that the longitudinal edges 2, 3 overlap to define an opening for introducing cables 4, tubes or similar in the interior of the sheath 1.

According to a first embodiment of the method, it comprises the following stages:
a) Plain braiding fibreglass filaments 7 and plastic monofilaments 8 to obtain a first layer 5;
b) Performing a first thermal shaping at a temperature between 200°C and 300°C that causes the first layer 5 to adopt a tubular shape, in the absence of biasing forces, wherein the edges 2, 3 do not overlap;
c) Cold adding a second layer 6 of silicone over the first layer 5, disposing a separation element between the two edges 2, 3 to avoid joining thereof;
d) Carrying out the vulcanisation of the second layer 6; and
e) Carrying out a second shaping that causes theb edges 2, 3 to overlap to configure a self-closing sheath 1.

Advantageously, at least part of the heat required for stage e) is heat provided in stage d).

According to a second variant of the method, the first layer 5 is obtained in a weaving shed loom with plastic monofilament weft and fibreglass warp, subsequently cold adding the silicone layer 6, followed by vulcanisation of the silicone layer 6, then cutting of the fabric to obtain the desired sheath perimeter 1 and carrying out a final shaping to obtain the self-closing effect.

According to a third variant of the method, the first layer 5 is obtained in a weaving shed loom that weaves the desired final width, using plastic monofilament weft and fibreglass warp, carrying out the silicone cold coating, followed by vulcanisation and final shaping to obtain the self-closing effect.

According to a fourth variant, the sheath 1 of the invention can be obtained using a method comprising the following stages:
- Plain braiding fibreglass filaments and plastic monofilaments to obtain a first layer 5.
- Cold adding a second layer of cold silicone over the first layer 6.
- Carrying out the vulcanisation of the second layer 6.
- Carrying out the shaping that causes the edges 2, 3 to overlap to configure the self-closing sheath 1.

Despite the fact that reference has been made to a specific embodiment of the invention, it is evident for a person skilled in the art that the sheath and methods described are susceptible of many variations and modifications, and that all the aforementioned details may be replaced by other technically equivalent ones, without departing from the scope of protection defined by the attached claims.

## Claims

1. A self-closing thermal and electrical fire protection sheath (1) having a substantially tubular shape when not subjected to biasing forces, such that the longitudinal edges (2, 3) overlap to define an opening for the insertion of cables (4), tubes or the like into the sheath (1), wherein the sheath (1) has a layered structure, with a first layer (5) made up of a fabric braided from fibreglass filaments (7) and plastic monofilaments (8) and a second, outer layer (6), **characterised in that** the second layer (6) is made of silicone, wherein the thickness of said second layer (6) is at least 200 microns.

2. The protection sheath, according to claim 1, wherein the second layer (6) also comprises an intumescent material.

3. The sheath, according to claim 2, wherein the intumescent material is graphite or ammonium polyphosphate.

4. The sheath, according to any of the preceding claims, wherein the monofilaments (8) are made of PEEK, PPS, polyester or are fluorinated monofilaments.

5. The sheath, according to any of the preceding claims, wherein the silicone layer (6) is adhered externally to the first layer (5).

6. A method for obtaining a self-closing thermal and electrical fire protection sheath (1) having a substantially tubular shape when not subjected to biasing forces, such that the longitudinal edges (2, 3) overlap to define an opening for the insertion of cables (4), tubes or the like into the sheath (1), which comprises at least the stages of obtaining a fabric made up of fibreglass filaments (7) and plastic monofilaments (8) for obtaining a first layer (5), cold adding a second silicone layer (6) over the first layer (5), vulcanising the second layer (6) and carrying out a second shaping that causes the edges (2, 3) to overlap to configure a self-closing sheath (1).

7. The method, according to the preceding claim, which comprises the following stages:
a) Plain braiding fibreglass filaments (7) and plastic monofilaments (8) to obtain a first layer (5);
b) Performing a first thermal shaping that causes the first layer (5) to adopt a tubular shape, in the absence of biasing forces, wherein the edges (2, 3) do not overlap;
c) Cold adding a second layer (6) of silicone over the first layer (5);
d) Carrying out vulcanising of the second layer (6); and
e) Carrying out a second shaping that causes the edges (2, 3) to overlap to configure a self-closing sheath (1).

8. The method, according to claim 7, wherein the stage b) is carried out at a temperature between 200°C and 300°C.

9. The method, according to any of claims 7 to 8, wherein stage c) is carried out disposing a separation element between the two edges (2, 3) to prevent the joining thereof.

10. The method, according to any of claims 7 to 9, wherein at least part of the necessary heat for stage e) is heat provided in stage d).

11. The method, according to any of claims 6 to 10, wherein the second layer (6) also comprises an intumescent material.

12. The method, according to claim 11, wherein the intumescent material is graphite.

13. The method, according to any of claims 6 to 12, wherein the monofilaments (8) are made of PEEK, PPS or polyester.

14. The method, according to claim 6, wherein the first layer (5) is obtained in a weaving shed loom with plastic monofilament weft and fibreglass warp, subsequently cold adding the silicone layer (6), followed by vulcanisation of the silicone layer (6), then cutting of the fabric to obtain the desired sheath perimeter (1) and carrying out a final shaping to obtain the self-closing effect.

15. The method, according to claim 6, wherein the first layer is obtained in weaving shed loom that weaves the desired final width, using plastic monofilament weft and fibreglass warp, carrying out the silicone cold coating, followed by vulcanisation and final shaping to obtain the self-closing effect.

16. The method, according to claim 6, comprising the stages of:
- Plain braiding fibreglass filaments and plastic monofilaments to obtain a first layer (5).
- Cold adding a second silicone layer over the first layer (6).
- Carrying out the vulcanisation of the second layer (6).
- Carrying out the shaping that causes the edges (2, 3) to overlap to configure a self-closing sheath (1).
